# NEUE EUROPÄISCHE PATENTSCHRIFT

(11) **EP 2 243 619 B2**
(45) Veröffentlichungstag und Bekanntmachung des Hinweises auf die Entscheidung über den Einspruch: **16.03.2022**
(45) Hinweis auf die Patenterteilung: 29.01.2014
(21) Anmeldenummer: 09158457.3
(22) Anmeldetag: 22.04.2009
(51) Int. Cl.: B27D 5/00, B29C 63/00, B29C 63/02, B29C 63/48, B29K 311/14, B29K 305/02

(54) **Vorrichtung und Verfahren zum Beschichten von Werkstücken**
Method and device for coating workpieces
Dispositif et procédé destinés au revêtement de pièces à usiner

(43) Veröffentlichungstag der Anmeldung: 27.10.2010
(73) Patentinhaber: Homag Holzbearbeitungssysteme AG, 72296 Schopfloch (DE)
(72) Erfinder: Schmid, Johannes, 72181, Starzach/Wachendorf (DE); Gauss, Achim, 72280, Dornstetten (DE); Fetscher, Dr. Joachim, 72296, Schopfloch (DE)
(74) Vertreter: Hoffmann Eitle

(56) Entgegenhaltungen:
- EP-A- 0 292 813
- EP-A- 1 386 720
- EP-A- 1 932 637
- EP-A- 2 052 822
- EP-A- 2 065 186
- EP-A- 2 065 217
- EP-A1- 0 743 139
- EP-A1- 1 990 152
- EP-A1- 2 052 822
- EP-A1- 2 065 186
- EP-A1- 2 065 217
- EP-A1- 2 191 947
- EP-A2- 0 276 358
- EP-A2- 0 292 813
- EP-A2- 1 386 720
- EP-A2- 1 445 082
- EP-A2- 1 800 813
- EP-A2- 1 932 637
- WO-A-2004/085152
- WO-A1-2004/085152
- DE-A1- 2 722 225
- DE-A1- 3 415 747
- DE-A1- 4 216 191
- DE-A1- 10 234 618
- DE-A1- 19 837 036
- DE-A1- 19 955 575
- DE-A1-102005 015 295
- DE-A1-102006 056 010
- DE-A1-102006 056 010
- DE-U1-202007 011 911
- US-A- 4 155 798
- US-A- 4 226 661
- US-A- 5 954 918
- US-A1- 2003 217 807
- US-A1- 2004 091 694
- US-A1- 2009 139 649

## Beschreibung

### Technisches Gebiet

Die Erfindung betrifft eine Vorrichtung zum Beschichten von Werkstücken, die bevorzugt zumindest abschnittsweise aus Holz, Holzwerkstoffen, Kunststoff, Aluminium oder dergleichen bestehen, nach dem Oberbegriff von Anspruch 1.

### Stand der Technik

Beispielsweise im Bereich der Möbel- und BauelementeIndustrie werden Werkstücke häufig an ihrer Oberfläche mit einem Beschichtungsmaterial versehen, beispielsweise einer Kante. Das Anbringen des Beschichtungsmaterials an den Werkstücken erfolgt üblicherweise mittels eines geeigneten Schmelzklebers, der beispielsweise im heißen, aufgeschmolzenen Zustand auf die Kante oder das Werkstück aufgetragen wird. Alternativ ist es auch möglich, eine mit Schmelzkleber vorbeschichtete Kante mittels eines Heißluftgebläses zu erwärmen und so den Schmelzkleber auf die gewünschte Aufschmelztemperatur zu bringen.

Darüber hinaus offenbart die DE 10 2006 056 010A1 ein Beschichtungsverfahren, bei welchem ein auf dem Beschichtungsmaterial oder dem Werkstück vorgesehenes Haftmittel unter Einsatz eines Lasers erwärmt bzw. aktiviert wird. Dieses Verfahren hat sich als sehr effizient erwiesen, da das Haftmittel sehr gezielt erwärmt bzw. aktiviert werden kann. Allerdings hat sich gezeigt, dass die Lasertechnologie nicht bei allen Arten von Werkstücken und Beschichtungsmaterialien optimale Beschichtungsergebnisse ermöglicht.

Als weiterer Stand der Technik ist das Dokument EP 0 292 813 A2 bekannt, das ein Verfahren und eine Vorrichtung zum Verbinden von Umleimteilen mit den Stirnseiten plattenförmiger Werkstücke betrifft. Bei dieser bekannten Vorrichtung ist eine höhenverstellbare Düse vorgesehen, die an ihrer der Stirnseite des Werkstücks zugekehrten Fläche in Vorschubrichtung B verlaufende Nuten aufweist, in deren Nutgrund jeweils Austrittsöffnungen für einen heißflüssigen Schmelzkleber vorgesehen sind. Ferner sind in Vorlaufrichtung hinter der ersten Düse eine zweite und dritte Düse angeordnet und mit Rollen an Ober- beziehungsweise Unterseite des vorbeilaufenden Werkstücks abgestützt.

Ferner ist eine Vorrichtung nach dem Dokument EP 2 065 217 A1 bekannt. Diese Vorrichtung umfasst zwei Kleberauftrageinheiten, die dazu eingerichtet sind, einen geeigneten Kleber auf eine Oberfläche eines bahnförmigen Materials bzw. die Oberfläche eines jeweiligen Werkstücks aufzubringen. Darüber hinaus kann anstelle einer Kleberauftrageinheit auch eine Kleberaktivierungseinheit vorgesehen sein, die eingerichtet ist, einen bereits auf dem jeweiligen bahnförmigen Material bzw. dem Werkstück vorgesehenen Kleber zu aktivieren, beispielsweise mittels wärme oder dergleichen.

Als weiterer Stand der Technik ist die WO 2004/085152 A1 bekannt, die ein Verfahren und eine Vorrichtung zur Herstellung einer Leichtbauplatte betrifft, sowie die EP 2065217 A1 (Stand der Technik gem. Art. 54(3) EPÜ).

### Darstellung der Erfindung

Es ist daher Aufgabe der vorliegenden Erfindung, eine Vorrichtung der eingangs genannten Art bereitzustellen, die eine hohe Variabilität und Anpassungsfähigkeit an wechselnde Beschichtungsanforderungen ermöglicht, um bei unterschiedlichsten Beschichtungsmaterialien und Werkstücken optimale Beschichtungsergebnisse zu erzielen. Ferner ist es Aufgabe der Erfindung, ein entsprechendes Beschichtungsverfahren bereitzustellen. Diese Aufgabe wird erfindungsgemäß durch eine Vorrichtung zum Beschichten von Werkstücken nach Anspruch 1 sowie ein Verfahren zum Beschichten von Werkstücken nach Anspruch 12 gelöst. Besonders bevorzugte Ausführungsformen der Erfindung sind in den abhängigen Ansprüchen angegeben.

Der Erfindung liegt der Gedanke zugrunde, die Vorteile unterschiedlicher Fügeverfahren in einer Vorrichtung bzw. einem Verfahren vorteilhaft zu vereinen. Zu diesem Zweck ist erfindungsgemäß vorgesehen, dass bei einer gattungsgemäßen Beschichtungsvorrichtung zumindest eine zweite Fügeeinrichtung zum Aufbringen und/oder Aktivieren eines Haftmittels auf einem in der Zuführeinrichtung zugeführten Beschichtungsmaterial und/oder einer zu beschichtenden Oberfläche eines Werkstücks vorgesehen ist.

Auf diese Weise lässt sich der Anwendungsbereich der erfindungsgemäßen Beschichtungsvorrichtung drastisch erhöhen, da nunmehr praktisch alle beliebigen Beschichtungsmaterialien, Haftmittel und Werkstücke verarbeitet werden können. Darüber hinaus ermöglicht die erfindungsgemäße Beschichtungsvorrichtung eine deutlich vergrößerte Betriebszuverlässigkeit, da bei regelmäßigen Wartungsarbeiten eine Fügeeinrichtung die Gesamtvorrichtung mit der mindestens einen weiteren Fügeeinrichtung weiterarbeiten kann. Ebenso können mögliche Ausfälle oder Beschädigungen einer Fügeeinrichtung durch die (mindestens eine) andere Fügeeinrichtung ausgeglichen werden. Dies erhöht die Zuverlässigkeit der erfindungsgemäßen Beschichtungsvorrichtung in beträchtlichem Maße.

Obgleich die erste und die zweite Fügeeinrichtung im Rahmen der Erfindung bei manchen Werkstücken auch zusammenarbeiten können, ist gemäß einer Weiterbildung der Erfindung vorgesehen, dass die erste und die mindestens eine zweite Fügeeinrichtung eingerichtet sind, im Wechselbetrieb Haftmittel zu aktivieren. Hierdurch lassen sich die oben genannten Vorteile der erhöhten Wartungsfreundlichkeit und Betriebszuverlässigkeit besonders ausgeprägt erzielen, und es wird ein besonders störungsfreier Betrieb ermöglicht.

Die mehreren Fügeeinrichtungen der erfindungsgemäßen Beschichtungsvorrichtung können ihren Fügebetrieb prinzipiell in festen Positionen ausführen, die beispielsweise benachbart zu der zu beschichtenden Oberfläche des Werkstücks oder der Zufuhreinrichtung zum Zuführen des Beschichtungsmaterials gelegen sind. Hierdurch ergibt sich ein besonders zügiger Betrieb der erfindungsgemäßen Beschichtungsvorrichtung ohne bzw. mit minimalen Wechselzeiten, der sich auch sehr gut für eine variantenreiche Fertigung bis hin zu einer Stückzahl-1-Fertigung eignet.

Gemäß einer Weiterbildung der Erfindung ist ferner vorgesehen, dass mindestens eine Fügeeinrichtung zwischen einer Fügeposition und einer Ruheposition bewegbar ist. Hierdurch kann die Fügeeinrichtung einerseits in der Fügeposition ein optimales Fügeergebnis erzielen, in dem beispielsweise ein optimaler Abstand und eine optimale Relativposition zu dem zu beschichtenden Werkstück bzw. zu dem Beschichtungsmaterial eingenommen wird. Andererseits ermöglicht die Ruheposition eine geringe Beeinträchtigung anderer Fügeeinrichtungen sowie gegebenenfalls eine gute Zugänglichkeit der entsprechenden, in der Ruheposition befindlichen Fügeeinrichtung, beispielsweise zu Reparaturoder Wartungszwecken.

Das Bewegen der Fügeeinrichtung zwischen einer Fügeposition und einer Ruheposition kann im Rahmen der vorliegenden Erfindung auch manuell erfolgen, beispielsweise indem die entsprechende Fügeeinrichtung entlang einer geeigneten Führung verschoben oder gegebenenfalls auch vollständig manuell aus der Fügeposition entformen und in der Ruheposition abgesetzt wird. Gemäß einer Weiterbildung der Erfindung ist jedoch vorgesehen, dass die erfindungsgemäße Vorrichtung mindestens einen Antrieb aufweist, um mindestens eine Fügeeinrichtung zwischen einer Fügeposition und einer Ruheposition zu bewegen. Hierdurch wird nicht nur ein vollständig automatisierter Betrieb der erfindungsgemäßen Vorrichtung ermöglicht, sondern es kann auch eine präzise Positionierung der jeweiligen Fügeeinrichtung in der Füge- bzw. Ruheposition sichergestellt werden.

Darüber hinaus ist gemäß einer Weiterbildung der Erfindung vorgesehen, dass mindestens eine Fügeeinrichtung lösbar in einer Aufnahme in einer Fügeposition der Vorrichtung einsetzbar ist, insbesondere mittels einer Schnellkupplung. Auf diese Weise ergibt sich eine besonders präzise Positionierung der Fügeeinrichtung in der jeweiligen Fügeposition, und es wird ein sicherer Halt der Fügeeinrichtung ermöglicht. Darüber hinaus ermöglicht der Einsatz einer Schnellkupplung, dass die zu bewegende Fügeeinrichtung weitgehend frei von Verbindungskabeln, Schläuchen und dergleichen ausgeführt werden kann und nur in der Fügeposition über die Schnellkupplung beispielsweise mit Daten, Energie, Haftmittel oder dergleichen versorgt wird. Hierdurch wird sowohl eine manuelle als auch eine automatisierte Bewegung der jeweiligen Fügeeinrichtung deutlich vereinfacht und gleichzeitig zuverlässiger bzw. weniger störungsanfällig gemacht.

Der Gesamtaufbau der Beschichtungsvorrichtung kann im Rahmen der vorliegenden Erfindung auf unterschiedlichste Weise ausgestaltet sein. Im Hinblick auf einen zügigen Betrieb und einen hohen Durchsatz der Beschichtungsvorrichtung hat es sich als vorteilhaft erwiesen, die Beschichtungsvorrichtung als Durchlaufmaschine auszubilden, bei der die Fördereinrichtung durch eine Durchlauffördereinrichtung wie beispielsweise ein Förderband, eine Rollenbahn oder dergleichen gebildet ist. Alternativ kann es sich auch um eine sogenannte Stationärmaschine handeln, bei welcher die jeweiligen Werkstücke während des Beschichtungsvorgangs weitgehend stationär angeordnet sind. Ebenso sind Mischformen beider Konzepte im Rahmen der Erfindung vorteilhaft möglich.

Dabei ist gemäß einer Weiterbildung der Erfindung vorgesehen, dass mindestens eine Fügeeinrichtung an einer bevorzugt balkenförmigen Führungseinrichtung angeordnet ist, die bevorzugt senkrecht zu ihrer Erstreckungsrichtung verfahrbar ist. Bei der Führungseinrichtung kann es sich beispielsweise um ein Portal oder einen Ausleger handeln, der sich beispielsweise oberhalb einer Werkstücktraganordnung erstrecken kann. Hierdurch kann die erfindungsgemäße Beschichtungsvorrichtung in die Lage versetzt werden, zusätzlich zu der Beschichtung auch weitere Bearbeitungen auszuführen, wie beispielsweise spanende Bearbeitungen. Auf diese Weise lässt sich eine weitere Erhöhung des Anwendungsbereichs der erfindungsgemäßen Beschichtungsvorrichtung mit geringem Aufwand erzielen.

Dabei ist es besonders bevorzugt, dass die mindestens eine Fügeeinrichtung entlang der Führungseinrichtung verfahrbar ist. Auf diese Weise können mehrere Oberflächen eines Werkstücks in einem Arbeitsgang zügig und fehlerfrei beschichtet werden bzw. es ergibt sich insgesamt eine hohe Arbeitsbandbreite der erfindungsgemäßen Vorrichtung.

Gemäß einer Weiterbildung der Erfindung ist ferner vorgesehen, dass sie mindestens eine Spindeleinheit mit einer Aufnahme zum bevorzugt automatischen Einwechseln von Bearbeitungswerkzeugen und/oder Bearbeitungsaggregaten aufweist. Hierdurch kann die erfindungsgemäße Vorrichtung für unterschiedlichste Bearbeitungsaufgaben eingesetzt werden, sodass in manchen Fällen sogar der gesamte Veredelungsvorgang eines Werkstücks in einer einzigen Maschine durchgeführt werden kann. Die hohe Variabilität und Einsatzbandbreite der erfindungsgemäßen Vorrichtung bleibt dabei erhalten.

Dabei ist es besonders bevorzugt, dass mindestens eine Fügeeinrichtung in die Aufnahme einer Spindeleinheit einwechselbar ist. Auf diese Weise kann die mindestens eine Fügeeinrichtung beispielsweise während der Durchführung spanender Bearbeitungen aus der Spindeleinheit entnommen und "in Sicherheit" gebracht werden, um beispielsweise nach Abschluss der spanenden Bearbeitungen mit geringem Zeitaufwand wieder eingewechselt zu werden und optimal für den nachfolgenden Beschichtungsvorgang bereitzustehen. Dabei ist es besonders bevorzugt, dass die Aufnahme der Spindeleinheit als HSK-Aufnahme ausgebildet ist und die Fügeeinrichtung einen entsprechenden HSK-(Hohlschaftkegel-)abschnitt zum Eingreifen in die HSK-Aufnahme besitzt. Eine derartige Schnittstelle vereint eine einfache und zügige Einwechselbarkeit mit einer sicheren Verbindung zwischen Fügeeinrichtung und Spindeleinheit.

Alternativ oder zusätzlich kann mindestens eine Fügeeinrichtung auch unabhängig von einer Aufnahme einer Spindeleinheit innerhalb der Vorrichtung vorgesehen sein. Auch in diesen Fällen ist es jedoch bevorzugt, dass mindestens eine Fügeeinrichtung mit einer Spindeleinheit verknüpft ist, um gemeinsam verfahrbar zu sein. Hierdurch ergibt sich eine einfache Konstruktion der erfindungsgemäßen Vorrichtung, ohne dass die mit der Spindeleinheit verknüpfte Fügeeinrichtung je nach Bedarf ein- und ausgewechselt werden muss.

Gemäß einer Weiterbildung der Erfindung ist ferner vorgesehen, dass mindestens eine Fügeeinrichtung mit einer zugehörigen Andrückeinrichtung zum Andrücken des Beschichtungsmaterials an eine Oberfläche eines Werkstücks bevorzugt auch einer Zuführeinrichtung zum Zuführen eines Beschichtungsmaterials und verknüpft ist. Hierdurch ergibt sich stets eine präzise und zuverlässige Zuordnung zwischen Fügeeinrichtung und Andrückeinrichtung und bevorzugt auch Zuführeinrichtung, sodass ein auf einem Beschichtungsmaterial vorhandenes oder aufzubringendes Haftmittel zuverlässig aktiviert bzw. aufgebracht werden kann.

Die Fügeeinrichtungen können im Rahmen der vorliegenden Erfindung auf unterschiedliche Art und Weise ausgestaltet sein, wobei mindestes eine Fügeeinrichtung beispielsweise auch durch eine klassische Schmelzkleber-Verleimtechnik gebildet sein kann. Darüber hinaus ist gemäß der Erfindung vorgesehen, dass mindestens eine Fügeeinrichtung eine Energiequelle aufweist. Der Begriff "Energie" ist im Rahmen der vorliegenden Erfindung in einem breiten Sinne aufzufassen. So ist es gemäß der Erfindung vorgesehen, dass die mindestens eine Energiequelle ausgewählt ist aus der Gruppe bestehend aus Laser, Infrarotquelle, Ultraschallquelle, Magnetfeldquelle, Mikrowellenquelle, Plasmaquelle und Begasungsquelle. Diese nicht abschließende Aufzählung macht deutlich, dass neben klassischen Energiequellen auch Energiequellen in Frage kommen, die Energie beispielsweise durch eine chemische Reaktion auf das Beschichtungsmaterial aufbringen, wie beispielsweise eine Begasungsquelle. In diesem Zusammenhang ist auch zu beachten, dass die jeweilige Energiequelle einerseits ein bereits als Haftmittel vorhandenes Mittel aktivieren kann und andererseits auch ein an sich nicht als Haftmittel dienendes Mittel durch Energiebeaufschlagung, chemische Reaktion oder dergleichen zu einem haftenden Mittel machen kann.

Jede der genannten Energiequellen besitzt ihre spezifischen Vorteile. So ermöglicht ein Laser ein besonders zielorientiertes und zügiges Arbeiten, während Infrarot- und Plasmaquellen einen breitspurigen Betrieb und eine gute Tiefenwirkung zulassen. Energiequellen mit Ultraschall, Magnetfeld und Mikrowelle arbeiten berührungslos und können auch während des Andrückens des Beschichtungsmaterials noch Energie in den Prozess einbringen. Dabei besitzt insbesondere ein Magnetfeld eine gute Tiefenwirkung. Eine auf Begasung basierende Energiequelle eignet sich besonders gut dazu, durch Einwirkung auf und Reaktion mit dem Beschichtungsmaterial überhaupt erst einen Stoff zu bilden, der haftende Eigenschaften besitzt.

Darüber hinaus betrifft die Erfindung ein Verfahren zum Beschichten von Werkstücken unter Einsatz einer erfindungsgemäßen Vorrichtung mit den Schritten nach Anspruch 12. Das erfindungsgemäße Verfahren zeichnet sich dadurch aus, dass zunächst eine erste Fügeeinrichtung zum Einsatz kommt, um ein Haftmittel auf einem in der Zuführeinrichtung zugeführten Beschichtungsmaterial und/oder einer zu beschichtenden Oberfläche eines Werkstücks zu aktivieren. Anschließend kommt eine zweite Fügeeinrichtung zum Einsatz, um bei der Beschichtung eines weiteren Werkstücks ein Haftmittel auf einem in der Zuführeinrichtung zugeführten Beschichtungsmaterial und/oder einer zu beschichtenden Oberfläche des weiteren Werkstücks zu aktivieren. Hierdurch lassen sich die oben unter Bezugnahme auf die erfindungsgemäße Vorrichtung beschriebenen Vorteile besonders ausgeprägt erzielen.

Dabei ist es besonders bevorzugt, dass die erste Fügeeinrichtung nach dem Aktivieren eines Haftmittels von einer Fügeposition in eine Ruheposition bewegt, insbesondere verfahren wird. Ebenso ist es besonders bevorzugt, dass die zweite Fügeeinrichtung vor dem Aufbringen und/oder Aktivieren eines Haftmittels in eine Fügeposition gebracht, insbesondere verfahren oder manuell eingesetzt wird.

### Kurze Beschreibung der Zeichnungen

- Fig. 1: zeigt schematisch eine teilweise Perspektivansicht einer Beschichtungsvorrichtung 1 als bevorzugte Ausführungsform der vorliegenden Erfindung;
- Fig. 2: zeigt schematisch eine weitere Perspektivansicht der in Fig. 1 gezeigten Beschichtungsvorrichtung;
- Fig. 3: zeigt schematisch eine Draufansicht eines Bearbeitungszentrums als zweite bevorzugte Ausführungsform der vorliegenden Erfindung; und
- Fig. 4: zeigt schematisch eine Draufansicht eines weiteren Bearbeitungszentrums als dritte bevorzugte Ausführungsform der vorliegenden Erfindung.

### Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

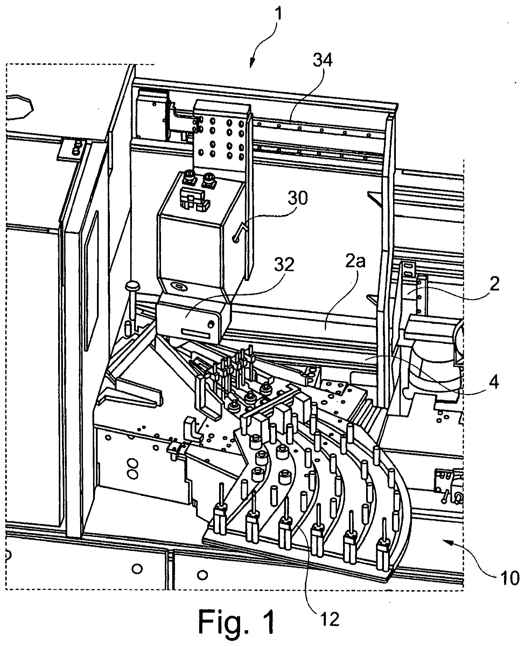

Eine Beschichtungsvorrichtung 1 zum Beschichten von Werkstücken 2 als bevorzugte Ausführungsform der vorliegenden Erfindung ist in Figur 1 schematisch in einer Perspektivansicht dargestellt. Die Beschichtungsvorrichtung 1 dient in der vorliegenden Ausführungsform zum Beschichten von plattenförmigen Werkstücken 2, die zumindest abschnittsweise aus Holz- Holzwerkstoffen, Kunststoff oder dergleichen bestehen, wie sie beispielsweise im Bereich der Möbel- und Bauelementeindustrie heute zum Einsatz kommen. Dabei kann es sich um unterschiedlichste Werkstücke wie beispielsweise Massivholz- oder Spanplatten, Leichtbauplatten, Sandwichplatten, Fußbodenleisten, Profile zur Profilummantelung etc. handeln. Es ist jedoch zu beachten, dass die vorliegende Erfindung nicht auf derartige Werkstücke beschränkt ist.

Die Beschichtungsvorrichtung 1 umfasst zunächst eine Fördereinrichtung 4, die in der vorliegenden Ausführungsform als Durchlauffördereinrichtung ausgestaltet ist, beispielsweise in Form eines Rollenförderers, Riemenförderers oder dergleichen. Dabei dient die Fördereinrichtung 4 dazu, die Werkstücke 2 in einer Durchlaufrichtung (von rechts nach links in Figur 1) zu fördern.

Neben der Fördereinrichtung 4 ist eine Zuführeinrichtung 10 zum Zuführen eines Beschichtungsmaterials 12 angeordnet, die in der vorliegenden Ausführungsform mehrere unterschiedliche Beschichtungsmaterialien zuführen kann. Bei dem Beschichtungsmaterial kann es sich beispielsweise um ein Kantenmaterial für eine Schmalfläche des Werkstücks, aber auch um ein Deckmaterial für eine Breitfläche oder jede andere beliebige Oberfläche des Werkstücks 2 handeln. Die Zuführeinrichtung 10 enthält einen Vorrat an Beschichtungsmaterial 12, das aus unterschiedlichsten Materialien bestehen kann, wie beispielsweise Kunststoff, Furnier, Papier, Pappe, Metall, etc. und vielfältigen Kombinationen hiervon. Dabei kann das Beschichtungsmaterial beispielsweise in Rollenform (ggf. in einer Kassette), aber auch in Form von Einzelabschnitten vorgesehen sein.

In der vorliegenden Ausführungsform gemäß Figur 1 enthält mindestens ein Beschichtungsmaterial eine integrale oder diskrete Schicht, die durch Energiezufuhr haftende Eigenschaften enthalten. Ein derartiges integrales Beschichtungsmaterial kann beispielsweise durch ein Kunststoffmaterial gebildet sein, das eine Schicht enthält, die durch die Energiezufuhr haftende Eigenschaften entfaltet. Bei Vorsehen einer diskreten Schicht kann das übrige Beschichtungsmaterial prinzipiell aus einem beliebigen Material bestehen. In jedem Falle ist die diskrete Schicht auf der dem Werkstücke zugewandten Seite des Beschichtungsmaterials angeordnet.

Die Zuführeinrichtung 10 führt das Beschichtungsmaterial 12 einer Andrückeinrichtung 20 zum Andrücken des Beschichtungsmaterials 12 an eine Oberfläche 2a des Werkstücks 2 zu. Bei der Andrückeinrichtung 20 handelt es sich in der vorliegenden Ausführungsform um eine Andrückrolle (anstelle einer Andrückrolle können beispielsweise auch Bänder, Schuhe oder dergleichen zum Einsatz kommen), die auf der Oberfläche 2a des Werkstücks 2 abrollt und auf diese Weise das Beschichtungsmaterial 12 an die Oberfläche 2a des Werkstücks 2 andrückt.

Ferner umfasst die Beschichtungsvorrichtung 1 eine erste Fügeeinrichtung in Form einer Energiequelle 30 zum Aufbringen von Energie auf das Haftmittel bzw. haftend machbare Mittel des Beschichtungsmaterials 12. Dabei kommen im Rahmen der vorliegenden Erfindung unterschiedlichste Energiequellen in Betracht, wie beispielsweise Laser, Infrarotquelle, Ultraschallquelle, Magnetfeldquelle, Mikrowellenquelle, Plasmaquelle, Begasungsquelle etc. Alle diese Energiequellen 30 stellen Energie in gerichteter Form bereit und richten diese auf das Haftmittel bzw. haftend machbare Mitte, das als integraler oder diskreter Teil des Beschichtungsmaterials 12 zugeführt wird. Die von der Energiequelle bereitgestellte Energie durchläuft eine Fokussiereinrichtung 32, die eingerichtet ist, die von der Energiequelle 30 bereitgestellte Energie auf ausgewählte Bereiche des zu aktivierenden oder zu erfolgenden Haftmittels zu richten.

Im einfachsten Falle kann es sich bei der Fokussiereinrichtung 32 um eine Linse handeln. Es ist jedoch zu beachten, dass je nach Energiequelle 30 unterschiedliche Fokussiereinrichtung 32 zum Einsatz kommen können, wobei die Fokussiereinrichtung jeweils eingerichtet sein kann, die Streubreite und gegebenenfalls auch die Intensität der aufgebrachten Energie einzustellen. Auf diese Weise richtet die Fokussiereinrichtung 32 die von der Energiequelle 30 bereitgestellte Energie in den Bereich unmittelbar stromaufwärts eines Andrückbereich, in welchem das Beschichtungsmaterial 12 an die Oberfläche 2a des Werkstücks 2 angedrückt wird.

Dieser Betrieb der Energiequelle 30 und auch der Fokussiereinrichtung 32 wird durch eine nicht näher gezeigte Steuereinrichtung gesteuert, wobei die Steuereinrichtung insbesondere die Leistung der Energiequelle 30 auf die Eigenschaften und Abmessungen des Haftmittels bzw. haftend machbaren Mittels sowie die Relativgeschwindigkeit zwischen Energiequelle 30 und Haftmittel bzw. Beschichtungsmaterial 12 abstimmt. Zusätzlich kann die Steuereinrichtung auch Informationen von Sensoren auswerten, die den Betrieb der Beschichtungsvorrichtung überwachen, beispielsweise Sensoren, die im Bereich des Andrückbereichs angeordnet sind und beispielsweise die Temperatur des aufgebrachten Beschichtungsmaterials 12 erfassen. Auf der Grundlage dieser Informationen kann die Steuereinrichtung nicht nur die Energiequelle 30, sondern gegebenenfalls auch die Fokussiereinrichtung 32 steuern.

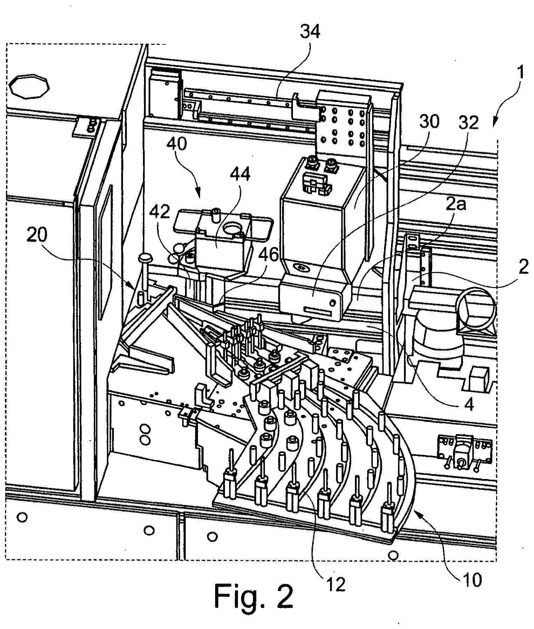

Die erste Fügeeinrichtung bzw. Energiequelle 30 ist in der vorliegenden Ausführungsform mittels einer Linearführung 34 derart gelagert, dass die erste Fügeeinrichtung 30 zwischen einer in Fig. 1 gezeigten Fügeposition und einer in Fig. 2 gezeigten Ruheposition bewegbar ist. Diese Bewegung der ersten Fügeeinrichtung 30 kann beispielsweise manuell oder gegebenenfalls auch mittels eines nicht gezeigten Antriebes erfolgen.

Darüber hinaus umfasst die Beschichtungsvorrichtung 1 in der vorliegenden Ausführungsform eine zweite Fügeeinrichtung 40, die in Fig. 2 schematisch dargestellt ist und ebenfalls zum Aufbringen und/oder Aktivieren eines Haftmittels auf einem in der Zuführeinrichtung 10 zugeführten Beschichtungsmaterial 12 und/oder einer zu beschichtenden Oberfläche 2a eines Werkstücks 2 dient. Die zweite Fügeeinrichtung 40 ist in der vorliegenden Ausführungsform nach Art einer klassischen Verleimtechnologie aufgebaut und umfasst einen Leimvorrat 44, in dem beispielsweise ein Schmelzklebergranulat vorgehalten wird, wobei das Schmelzklebergranulat mittels einer nicht näher gezeigten Heizvorrichtung auf die gewünschte Schmelztemperatur gebracht werden kann. Darüber hinaus besitzt die zweite Fügeeinrichtung 40 in der vorliegenden Ausführungsform eine Leimauftragswalze 42, mittels der der aufgeschmolzene Klebstoff auf das Beschichtungsmaterial 12 oder die Oberfläche 2a des Werkstücks aufgetragen werden kann.

Die zweite Fügeeinrichtung 40 ist in der vorliegenden Ausführungsform in einer Aufnahme 46 der Vorrichtung 1 derart eingesetzt, dass sie bei Bedarf - gegebenenfalls auch manuell - wieder entnommen werden kann. Um die zweite Fügeeinrichtung 40 sicher in der Aufnahme 46 zu halten, kann in dieser beispielsweise eine Schnellkupplung oder dergleichen vorgesehen sein.

Der Betrieb der erfindungsgemäßen Beschichtungsvorrichtung 1 vollzieht sich in der vorliegenden Ausführungsform beispielsweise wie folgt. Zunächst befindet sich die erste Fügeeinrichtung 30 in der in Fig. 1 gezeigten Fügeposition. In dieser Position kann die erste Fügeeinrichtung 30 das zugeführte Beschichtungsmaterial 12 oder die zu beschichtende Oberfläche 2a des Werkstücks 2 mit Energie beaufschlagen, um so ein dort vorgesehenes Haftmittel zu aktivieren. Anschließend wird das Beschichtungsmaterial 12 mittels der Andrückrolle 20 an die zu beschichtende Oberfläche 2a des Werkstücks angedrückt, sodass das Beschichtungsmaterial 12 fest mit dem Werkstück 2 verbunden wird. Sobald beispielsweise ein anderes, nicht mit einem Haftmittel versehenes Beschichtungsmaterial 12 verarbeitet werden soll oder ein Wartungs- oder Reparaturvorgang an der ersten Fügeeinrichtung 30 erforderlich ist, wird die erste Fügeeinrichtung 30 von der Fügeposition in die in Fig. 2 gezeigte Ruheposition verschoben bzw. verfahren. Nunmehr wird die zweite Fügeeinrichtung 40 in die Aufnahme 46 der Beschichtungsvorrichtung 1 eingesetzt und befindet sich dort in ihrer Fügeposition. Nunmehr wird mittels der zweiten Fügeeinrichtung 40 zugeführtes Beschichtungsmaterial 12 bzw. die zu beschichtende Oberfläche 2a des Werkstücks 2 mit Haftmittel versehen, und das Beschichtungsmaterial 12 wird mittels der Andrückrolle 20 fest an die zu beschichtende Oberfläche 2a des Werkstücks 2 angebracht.

Nach Abschluss der erforderlichen Bearbeitung unter Einsatz der zweiten Fügeeinrichtung 40 kann diese aus der Aufnahme 46 entnommen werden, um anschließend die erste Fügeeinrichtung 30 von deren Ruheposition in die in Fig. 1 gezeigte Fügeposition zu verschieben. Nunmehr kann erneut ein Beschichtungsvorgang unter Einsatz der ersten Fügeeinrichtung 30 durchgeführt werden.

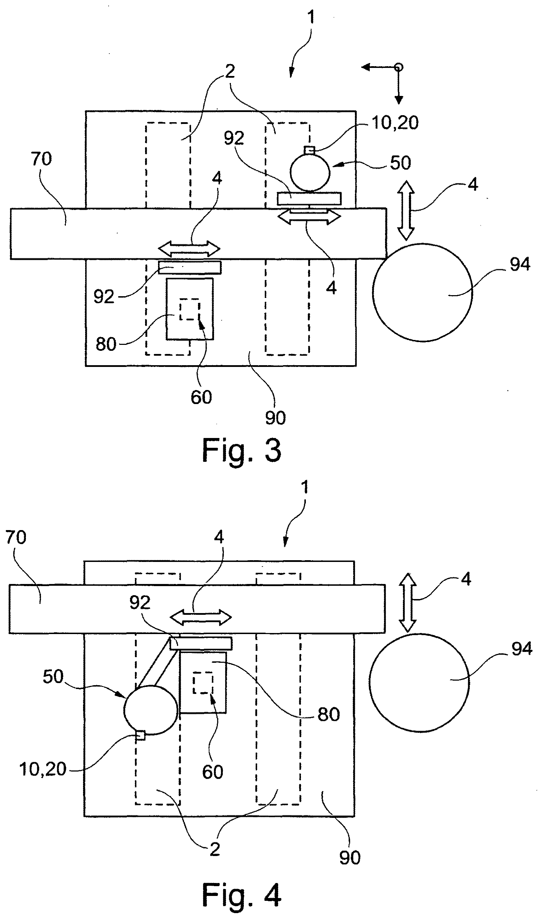

Eine zweite bevorzugte Ausführungsform einer erfindungsgemäßen Vorrichtung 1 zum Beschichten von Werkstücken 2 wird nachfolgend unter Bezugnahme auf Fig. 3 beschrieben, die eine schematische Draufsicht einer Vorrichtung 1 zum Beschichten von Werkstücken 2 zeigt. Die in Fig. 3 gezeigte Vorrichtung 1 ist beispielhaft als Bearbeitungszentrum ausgeführt, das einen stationären oder gegebenenfalls in Grenzen verfahrbaren Spanntisch 90 aufweist, auf welchen die Werkstücke 2 aufgespannt werden können. Dabei kann der Spanntisch beispielsweise auch als Drehtisch ausgestaltet sein.

Oberhalb des Spanntisches erstreckt sich ein Ausleger oder Portal 70, der senkrecht zu seiner Erstreckungsrichtung entlang des Spanntisches 90 verfahrbar ist. Dabei ist zu beachten, dass eine erfindungsgemäße Vorrichtung auch mehrere Ausleger und/oder Portale aufweisen kann, die jeweils mit einem oder mehreren geeigneten Einrichtungen bestückt sein können. Ferner ist es insbesondere bei verfahrbaren Spanntischen(en) möglich, das mindestens eine Führungseinrichtung stationär angeordnet ist.

An der Führungseinrichtung 70 ist über einen Kreuzschlitten 92 eine erste Fügeeinrichtung 50 vorgesehen, an der wiederum eine kombinierte Zuführeinrichtung 10 und Andrückeinrichtung 20 angeordnet ist. Dabei kann die erste Fügeeinrichtung 50 beispielsweise entsprechend der oben beschriebenen ersten Fügeeinrichtung ausgewählt sein.

Auf der gegenüberliegenden Seite (oder gegebenenfalls der gleichen Seite) der Führungseinrichtung 70 ist über einen weiteren Kreuzschlitten 92 eine Spindeleinheit 80 vorgesehen, in die über eine Schnittstelle mit einer (HSK-)Aufnahme Bearbeitungswerkzeuge und Bearbeitungsaggregate eingewechselt werden können. Bei der Schnittstelle kann es sich beispielsweise um eine universelle Schnittstelle handeln, wie sie in der Patentanmeldung EP 0 743 139 der Anmelderin offenbart ist.

In diese Schnittstelle ist in dem in Fig. 3 gezeigten Zustand eine zweite Fügeeinrichtung 60 eingewechselt, bei der es sich beispielsweise um ein mit Schmelzkleber arbeitendes Verleimaggregat handeln kann. Dabei weist das Verleimaggregat 60 einen Anschlussabschnitt auf, der in die (HSK-)Aufnahme der Spindeleinheit 80 einwechselbar ist.

Am rechten äußeren Ende der Führungseinrichtung 70 ist ein Magazin 94 für Bearbeitungswerkzeuge und Bearbeitungsaggregate vorgesehen, das derart ausgestaltet ist, um die Spindeleinheit 80 automatisch mit Bearbeitungswerkzeugen und Bearbeitungsaggregaten einschließlich der zweiten Fügeeinrichtung 60 zu versorgen. Dabei ist es ebenso möglich, dass in dem Magazin 94 mehrere Fügeeinrichtungen 60 vorgehalten werden, die je nach Bedarf in die Spindeleinheit 80 eingewechselt werden.

Auf diese Weise ermöglicht das in Fig. 3 gezeigte Bearbeitungszentrum eine vollständige oder zumindest weitgehende Bearbeitung und Veredelung von Werkstücken 2, wobei je nach Bedarf unterschiedliche Beschichtungstechnologien zum Einsatz kommen können.

Eine alternative Ausgestaltung des in Fig. 3 gezeigten Bearbeitungszentrums 1 ist in Fig. 4 in einer schematischen Draufsicht als dritte bevorzugte Ausführungsform der Erfindung dargestellt. Die in Fig. 4 gezeigte Ausführungsform zeichnet sich dadurch aus, dass die erste Fügeeinrichtung 50 betrieblich mit der zweiten Spindeleinheit 80 bzw. mit deren Kreuzschlitten 92 gekoppelt ist, sodass beide Einheiten gemeinsam miteinander verfahren werden können. Auch in diesem Falle kann die zweite Fügeeinrichtung 50 gegebenenfalls auf der gegenüberliegenden Seite der Führungseinrichtung 70 angeordnet und dennoch über eine geeignete Verbindung mit der Spindeleinheit 80 gekoppelt sein.

Auch bei der in Fig. 4 gezeigten, zweiten Ausführungsform können vorteilhaft unterschiedlichste Werkzeuge und Bearbeitungsaggregate (einschließlich Fügevorrichtungen) in dem Magazin 94 bereitgehalten und je nach Bedarf in die Aufnahme bzw. Schnittstelle der Spindeleinheit 80 eingewechselt werden. Ein erfindungsgemäßes Bearbeitungszentrum bzw. eine ähnliche erfindungsgemäße Vorrichtung muss daher nicht notwendigerweise eine fest aufgebaute Fügeeinrichtung besitzen, sondern kann gegebenenfalls auch mehrere in einem Magazin oder dergleichen vorgehaltene Fügeeinrichtungen enthalten, die wechselweise oder gleichzeitig in eine oder mehrere Spindeleinheiten eingewechselt werden können.

## Patentansprüche

1. Vorrichtung (1) zum Beschichten von Werkstücken (2), die bevorzugt zumindest abschnittsweise aus Holz, Holzwerkstoffen, Kunststoff, Aluminium oder dergleichen bestehen, umfassend:
eine Zuführeinrichtung (10) zum Zuführen eines Beschichtungsmaterials (12),
eine Andrückeinrichtung (20) zum Andrücken des Beschichtungsmaterials (12) an eine Oberfläche (2a) eines Werkstücks (2),
eine Fördereinrichtung (4) zum Herbeiführen einer Relativbewegung zwischen der Andrückeinrichtung (20) und dem jeweiligen Werkstück (2), und
eine erste Fügeeinrichtung (30; 50) zum Aktivieren eines Haftmittels auf einem in der Zuführeinrichtung (10) zugeführten Beschichtungsmaterial (12), wobei
die Vorrichtung ferner zumindest eine zweite Fügeeinrichtung (40; 60) zum Aufbringen und Aktivieren eines Haftmittels auf einer zu beschichtenden Oberfläche eines Werkstücks (2) aufweist,
wobei mindestens eine der Fügeeinrichtungen (30, 40; 50, 60) eine Energiequelle aufweist,
**dadurch gekennzeichnet, dass** die Energiequelle ausgewählt ist aus der Gruppe bestehend aus Laser, Infrarotquelle, Ultraschallquelle, Magnetfeldquelle, Mikrowellenquelle, Plasmaquelle und Begasungsquelle,
wobei die erste (30; 50) und die mindestens eine zweite (40; 60) Fügeeinrichtung eingerichtet sind, im Wechselbetrieb Haftmittel zu aktivieren.

2. Vorrichtung nach Anspruch 1, **dadurch gekennzeichnet, dass** mindestens eine Fügeeinrichtung stationär angeordnet ist.

3. Vorrichtung nach einem der vorhergehenden Ansprüche, **dadurch gekennzeichnet, dass** mindestens eine Fügeeinrichtung (30, 40; 50, 60) zwischen einer Fügeposition und einer Ruheposition bewegbar ist.

4. Vorrichtung nach Anspruch 3, **dadurch gekennzeichnet, dass** mindestens ein Antrieb vorgesehen ist, um mindestens eine Fügeeinrichtung (30; 50, 60) zwischen einer Fügeposition und einer Ruheposition zu bewegen.

5. Vorrichtung nach einem der vorhergehenden Ansprüche, **dadurch gekennzeichnet, dass** mindestens eine Fügeeinrichtung (40) lösbar in eine Aufnahme (46) in einer Fügeposition der Vorrichtung einsetzbar ist, insbesondere mittels einer Schnellkupplung.

6. Vorrichtung nach einem der vorhergehenden Ansprüche, **dadurch gekennzeichnet, dass** mindestens eine Fügeeinrichtung (50, 60) an einer bevorzugt balkenförmigen Führungseinrichtung (70) angeordnet ist, die bevorzugt senkrecht zu ihrer Erstreckungsrichtung verfahrbar ist, wobei die mindestens eine Fügeeinrichtung (50, 60) bevorzugt entlang der Führungseinrichtung (70) verfahrbar ist.

7. Vorrichtung nach Anspruch 6, **dadurch gekennzeichnet, dass** sie ferner mindestens eine Spindeleinheit (80) mit einer Aufnahme zum bevorzugt automatischen Einwechseln von Bearbeitungswerkzeugen und/oder Bearbeitungsaggregaten aufweist.

8. Vorrichtung nach Anspruch 7, **dadurch gekennzeichnet, dass** mindestens eine Fügeeinrichtung (60) in die Aufnahme einer Spindeleinheit einwechselbar ist, die bevorzugt eine HSK-Aufnahme aufweist.

9. Vorrichtung nach Anspruch 7 oder 8, **dadurch gekennzeichnet, dass** mindestens eine Fügeeinrichtung (50) mit einer Spindeleinheit (80) verknüpft ist, um gemeinsam verfahrbar zu sein.

10. Vorrichtung nach einem der vorhergehenden Ansprüche, **dadurch gekennzeichnet, dass** mindestens eine Fügeeinrichtung (50, 60) mit einer zugehörigen Andrückeinrichtung (20) zum Andrücken des Beschichtungsmaterials (12) an eine Oberfläche (2a) eines Werkstücks (2) und bevorzugt auch einer Zuführeinrichtung (10) zum Zuführen eines Beschichtungsmaterials (12) verknüpft ist.

11. Verfahren zum Beschichten von Werkstücken (2), die bevorzugt zumindest abschnittsweise aus Holz, Holzwerkstoffen, Kunststoff, Aluminium oder dergleichen bestehen, unter Einsatz einer Vorrichtung (1), welche Vorrichtung umfasst:
eine Zuführeinrichtung (10) zum Zuführen eines Beschichtungsmaterials (12),
eine Andrückeinrichtung (20) zum Andrücken des Beschichtungsmaterials (12) an eine Oberfläche (2a) eines Werkstücks (2),
eine Fördereinrichtung (4) zum Herbeiführen einer Relativbewegung zwischen der Andrückeinrichtung (20) und dem jeweiligen Werkstück (2), und
eine erste Fügeeinrichtung (30; 50) zum Aktivieren eines Haftmittels auf einem in der Zuführeinrichtung (10) zugeführten Beschichtungsmaterial (12), wobei
die Vorrichtung ferner zumindest eine zweite Fügeeinrichtung (40; 60) zum Aufbringen und Aktivieren eines Haftmittels auf einer zu beschichtenden Oberfläche eines Werkstücks (2) aufweist,
wobei mindestens eine der Fügeeinrichtungen (30; 50) eine Energiequelle aufweist, welche
Energiequelle ausgewählt ist aus der Gruppe bestehend aus Laser, Infrarotquelle, Ultraschallquelle, Magnetfeldquelle, Mikrowellenquelle, Plasmaquelle und Begasungsquelle,
wobei die erste (30; 50) und die mindestens eine zweite (40; 60) Fügeeinrichtung eingerichtet sind, im Wechselbetrieb Haftmittel zu aktivieren,
wobei das Verfahren die Schritte aufweist:
Herbeiführen einer Relativbewegung zwischen der Andrückeinrichtung (20) und dem jeweiligen Werkstück (2) mittels der Fördereinrichtung (4),
Zuführen des Beschichtungsmaterials (12) mittels der Zuführeinrichtung (10),
Aktivieren eines Haftmittels auf einem in der Zuführeinrichtung (10) zugeführten Beschichtungsmaterial (12) mittels der ersten Fügeeinrichtung (30; 50), und anschließend
Aufbringen und Aktivieren eines Haftmittels auf einer zu beschichtenden Oberfläche eines weiteren Werkstücks (2) mittels der zweiten Fügeeinrichtung (40; 60).

12. Verfahren nach Anspruch 11, **dadurch gekennzeichnet, dass** die erste Fügeeinrichtung (30; 50) nach dem Aktivieren eines Haftmittels von einer Fügeposition in eine Ruheposition bewegt, insbesondere verfahren wird.

13. Verfahren nach Anspruch 11, **dadurch gekennzeichnet, dass** die zweite Fügeeinrichtung (40; 60) vor dem Aufbringen und/oder Aktivieren eines Haftmittels in eine Fügeposition gebracht, insbesondere verfahren oder manuell eingesetzt wird.

## Claims

1. Apparatus (1) for coating workpieces (2) that preferably consist, at least in portions, of wood, wood-based materials, plastics material, aluminium or the like, said apparatus comprising:
a supply device (10) for supplying a coating material (12),
a pressing device (20) for pressing the coating material (12) onto a surface (2a) of a workpiece (2),
a conveying device (4) for bringing about a relative movement between the pressing device (20) and the relevant workpiece (2), and
a first joining device (30; 50) for activating an adhesive on a coating material (12) supplied in the supply device (10),
wherein the apparatus further comprises at least one second joining device (40; 60) for applying and activating an adhesive on a surface of a workpiece (2) to be coated,
wherein at least one of the joining devices (30, 40; 50, 60) comprises an energy source,
**characterised in that** the energy source is selected from the group consisting of a laser, infrared source, ultrasound source, magnetic field source, microwave source, plasma source and gassing source,
wherein the first (30; 50) and the at least one second (40; 60) joining device are designed to activate adhesives in alternating operation.

2. Apparatus according to claim 1, **characterised in that** at least one joining device is arranged so as to be stationary.

3. Apparatus according to any of the preceding claims, **characterised in that** at least one joining device (30, 40; 50, 60) can be moved between a joining position and a rest position.

4. Apparatus according to claim 3, **characterised in that** at least one drive is provided for moving at least one joining device (30; 50, 60) between a joining position and a rest position.

5. Apparatus according to any of the preceding claims, **characterised in that** at least one joining device (40) can be releasably inserted into a holder (46) in a joining position of the apparatus, in particular by means of a quick-action coupling.

6. Apparatus according to any of the preceding claims, **characterised in that** at least one joining device (50, 60) is arranged on a preferably beam-shaped guiding device (70) that can preferably be moved perpendicularly to the direction of extension thereof, wherein the at least one joining device (50, 60) can preferably be moved along the guiding device (70).

7. Apparatus according to claim 6, **characterised in that** it further comprises at least one spindle unit (80) having a holder for changing machining tools and/or machining units preferably automatically.

8. Apparatus according to claim 7, **characterised in that** at least one joining device (60) can be inserted in the holder of a spindle unit, which preferably comprises an HSK holder.

9. Apparatus according to claim 7 or 8, **characterised in that** at least one joining device (50) is connected to a spindle unit (80) such that they can be moved together.

10. Device according to any of the preceding claims, **characterised in that** at least one joining device (50, 60) is connected to an associated pressing device (20) for pressing the coating material (12) onto a surface (2a) of a workpiece (2) and preferably also to a supply device (10) for supplying a coating material (12).

11. Method for coating workpieces (2) that preferably consist, at least in portions, of wood, wood-based materials, plastics material, aluminium or the like, using an apparatus (1) that comprises:
a supply device (10) for supplying a coating material (12),
a pressing device (20) for pressing the coating material (12) onto a surface (2a) of a workpiece (2),
a conveying device (4) for bringing about a relative movement between the pressing device (20) and the respective workpiece (2), and
a first joining device (30; 50) for activating an adhesive on a coating material (12) supplied in the supply device (10), wherein
the apparatus further comprises at least one second joining device (40; 60) for applying and activating an adhesive on a surface of a workpiece (2) to be coated,
wherein at least one of the joining devices (30; 50) comprises an energy source, which
energy source is selected from the group consisting of a laser, infrared source, ultrasound source, magnetic field source, microwave source, plasma source and gassing source,
wherein the first (30; 50) and the at least one second (40; 60) joining device are designed to activate adhesives in alternating operation,
wherein the method comprises the steps of:
bringing about a relative movement between the pressing device (20) and the respective workpiece (2) by means of the conveying device (4),
supplying the coating material (12) by means of the supply device (10),
activating an adhesive on a coating material (12) supplied in the supply device (10), by means of the first joining device (30; 50), and subsequently
applying and activating an adhesive on a surface of another workpiece (2) to be coated, by means of the second joining device (40; 60).

12. Method according to claim 11, **characterised in that** the first joining device (30; 50) moves, in particular is moved, from a joining position into a rest position after activation of an adhesive.

13. Method according to claim 11, **characterised in that** the second joining device (40; 60) is brought, in particular moved or manually inserted, into a joining position prior to application and/or activation of an adhesive.

## Revendications

1. Installation (1) pour le revêtement de pièces (2), préférentiellement au moins partiellement en bois, matériaux ligneux, matière synthétique, aluminium ou similaires, comprenant :
un dispositif d'avance (10) pour l'amenée d'un matériau de revêtement (12),
un dispositif de serrage (20) pour le serrage du matériau de revêtement (12) contre une surface (2a) d'une pièce (2),
un dispositif de convoyage (4) pour le déclenchement d'un déplacement relatif entre le dispositif de serrage (20) et la pièce (2) respective, et
un premier dispositif d'assemblage (30 ; 50) pour l'activation d'un adhésif sur un matériau de revêtement (12) amené dans le dispositif d'avance (10), dans laquelle
l'installation comprend en outre au moins un deuxième dispositif d'assemblage (40 ; 60) pour l'application et l'activation d'un adhésif sur une surface d'une pièce (2) à revêtir,
dans laquelle au moins un des dispositifs d'assemblage (30, 40 ; 50, 60) comporte une source d'énergie,
**caractérisée en ce que** la source d'énergie est sélectionnée dans le groupe composé de laser, de source de lumière infrarouge, de source d'ultrasons, de source de champ magnétique, de source de micro-ondes, de source de plasma et de source de gaz,
dans laquelle le premier (30; 50) et le ou les deuxièmes (40 ; 60) dispositifs d'assemblage sont prévus pour activer l'adhésif en alternance.

2. Installation selon la revendication 1, **caractérisée en ce qu'**au moins un dispositif d'assemblage est agencé de manière fixe.

3. Installation selon l'une des revendications précédentes, **caractérisée en ce qu'**au moins un dispositif d'assemblage (30, 40 ; 50, 60) est déplaçable entre une position d'assemblage et une position de repos.

4. Installation selon la revendication 3, **caractérisée en ce qu'**au moins un entraînement est prévu pour déplacer au moins un dispositif d'assemblage (30 ; 50, 60) entre une position d'assemblage et une position de repos.

5. Installation selon l'une des revendications précédentes, **caractérisée en ce qu'**au moins un dispositif d'assemblage (40) peut être monté de manière amovible dans une réception (46), en particulier au moyen d'un raccord rapide dans une position d'assemblage de l'installation.

6. Installation selon l'une des revendications précédentes, **caractérisée en ce qu'**au moins un dispositif d'assemblage (50, 60) est disposé sur un dispositif de guidage (70) préférentiellement en forme de barre, déplaçable de préférence perpendiculairement à sa direction d'extension, dans laquelle le ou les dispositifs d'assemblage (50, 60) sont préférentiellement déplaçables le long du dispositif de guidage (70).

7. Installation selon la revendication 6, **caractérisée en ce que** celle-ci comporte en outre au moins une unité de broche (80) avec une réception pour le changement préférentiellement automatique d'outils d'usinage et/ou d'agrégats d'usinage.

8. Installation selon la revendication 7, **caractérisée en ce qu'**au moins un dispositif d'assemblage (60) peut être changé dans la réception d'une unité de broche qui comporte préférentiellement un attachement HSK.

9. Installation selon la revendication 7 ou 8, **caractérisée en ce qu'**au moins un dispositif d'assemblage (50) est accouplé à une unité de broche (80) pour permettre un déplacement commun.

10. Installation selon l'une des revendications précédentes, **caractérisée en ce qu'**au moins un dispositif d'assemblage (50, 60) est accouplé à un dispositif de serrage (20) correspondant pour le serrage du matériau de revêtement (12) contre une surface (2a) d'une pièce (2) et préférentiellement aussi à un dispositif d'avance (10) pour l'amenée d'un matériau de revêtement (12).

11. Procédé de revêtement de pièces (2), préférentiellement au moins partiellement en bois, matériaux ligneux, matière synthétique, aluminium ou similaires, recourant à une installation (1), laquelle installation comporte
un dispositif d'avance (10) pour l'amenée d'un matériau de revêtement (12),
un dispositif de serrage (20) pour le serrage du matériau de revêtement (12) contre une surface (2a) d'une pièce (2),
un dispositif de convoyage (4) pour le déclenchement d'un déplacement relatif entre le dispositif de serrage (20) et la pièce (2) respective, et
un premier dispositif d'assemblage (30 ; 50) pour l'activation d'un adhésif sur un matériau de revêtement (12) avancé dans le dispositif d'avance (10), dans laquelle
l'installation comprend en outre au moins un deuxième dispositif d'assemblage (40 ; 60) pour l'application et l'activation d'un adhésif sur une surface d'une pièce (2) à revêtir,
dans lequel au moins un des dispositifs d'assemblage (30 ; 50) comporte une source d'énergie, laquelle
source d'énergie est sélectionnée dans le groupe composé de laser, de source de lumière infrarouge, de source d'ultrasons, de source de champ magnétique, de source de micro-ondes, de source de plasma et de source de gaz,
dans lequel le premier (30; 50) et le ou les deuxièmes (40; 60) dispositifs d'assemblage sont prévus pour activer l'adhésif en alternance,
dans lequel le procédé présente les étapes suivantes :
déclenchement d'un déplacement relatif entre le dispositif de serrage (20) et la pièce (2) respective au moyen du dispositif de convoyage (4),
amenée du matériau de revêtement (12) au moyen du dispositif d'avance (10),
activation d'un adhésif sur un matériau de revêtement (12) avancé dans le dispositif d'avance (10) au moyen du premier dispositif d'assemblage (30 ; 50), et enfin
application et/ou activation d'un adhésif sur une surface d'une autre pièce (2) à revêtir au moyen du deuxième dispositif d'assemblage (40 ; 60).

12. Procédé selon la revendication 11, **caractérisé en ce que** le premier dispositif d'assemblage (30 ; 50) est mis en mouvement, en étant notamment déplacé d'une position d'assemblage vers une position de repos après l'activation d'un adhésif.

13. Procédé selon la revendication 11, **caractérisé en ce que** le deuxième dispositif d'assemblage (40; 60) est mis en mouvement, en étant notamment déplacé ou manuellement monté vers une position d'assemblage avant l'application et/ou l'activation d'un adhésif.
